# EUROPEAN PATENT SPECIFICATION

(11) **EP 3 792 168 B1**
(45) Date of publication and mention of the grant of the patent: **25.11.2026**
(21) Application number: 19800051.5
(22) Date of filing: 10.04.2019
(51) Int. Cl.: B62J 1/08, B62J 1/10

(54) **RIDING SADDLE WITH MULTIPLE FREEDOM DEGREES**
REITSATTEL MIT MEHREREN FREIHEITSGRADEN
SELLE À MULTIPLES DEGRÉS DE LIBERTÉ

(30) Priority: 09.05.2018 CN 201810436549
(43) Date of publication of application: 17.03.2021
(73) Proprietor: Han, Shejun, Chengguan Town, Yichuan County Luoyang Henan 471000 (CN)
(72) Inventor: HAN, Yunlong, Luoyang, Henan 471000 (CN); WANG, Jia'ning, Luoyang, Henan 471000 (CN)
(74) Representative: Haseltine Lake Kempner LLP
(86) International application number: PCT/CN2019/081986
(87) International publication number: WO 2019/214386

(56) References cited:
- CN-A- 104 908 852
- CN-A- 107 651 055
- CN-A- 107 651 055
- CN-A- 108 382 505
- CN-U- 206 202 506
- CN-U- 206 202 506
- CN-U- 208 216 879
- FR-A1- 3 055 253
- IT-A1- BA20 110 002
- IT-A1- UB20 154 760
- KR-A- 20160 006 065
- KR-B1- 101 230 633
- US-A1- 2017 073 028

## Description

### BACKGROUND

### Technical Field

The present invention relates to the field of bicycle accessories, and in particular, to a multi-degree-of-freedom riding saddle.

### Related Art

With the development of the society and the improvement of people's living standards, bicycles have evolved from a simple means of transportation to an exercise mode that the masses are delighted to hear and see. People of different ages and physiques can get moderate exercise through cycling, and can flexibly formulate exercise routes and exercise intensity plans according to their physical conditions and environmental factors. Cycling has fewer constraints and strong autonomy, and the people can further better contact the nature during exercise, which is good for physical and mental health.

Most of the bicycle saddles in the prior art are designed to have a front tip and a rear wider part integrally. Two legs of a rider are separated on two sides of a protruding tip of the seat. The protruding tip directly rubs against a root of a thigh of the rider. When the rider has ridden for a long time, damage to the skin of the root of the thigh of the rider may be caused. In addition, the protruding tip directly presses a perineum of the rider. For a male rider, long-term pressure on the perineum will inevitably affect blood circulation of the perineum, causing frequent urination, urgency of urination, genital discomfort, and even inflammation due to prolonged hyperemia of a prostate, thereby affecting physical and mental health.

In order to resolve the foregoing problem, a type of seat with separate seat plates has recently appeared on the market. Front ends of the two seat plates may rise and fall as the thighs on two sides of the rider alternately reciprocate during riding, better resolving a problem of pressing the perineum of the rider by the protruding tip of the traditional bicycle saddle. However, a degree of freedom of this kind of bicycle saddle is low, and a movable part is only limited to a front end of the seat plate. During actual riding, heights of rear ends of the two seat plates are still basically unchanged, causing the following problems: For example, when a right thigh exerts force for pedaling, the right thigh exerts force and presses down, and a left thigh rises without exerting force. On the one hand, the left thigh rises and separates from a middle portion and a rear portion of a seat plate on a left side, causing all the pressure to be concentrated between the right thigh and a seat plate on the right side. Such alternately reciprocation will cause intermittent squeezing on two thighs of the rider by the two seat plates of the bicycle saddle, which also causes discomfort to the rider. On the other hand, the middle portion and the rear portion of the two seat plates are always at the same height, so that a force transmission channel between waist force of the rider and force of pedaling feet of the bicycle is blocked too much by the saddling during the pedaling, and the riding is more laborious.

KR 2016 0006065 A describes a saddle for a bicycle which enables a rider to ride a bicycle for a long time without pain in the hip by eliminating a pressure on a perineal region; and is able to reduce weight and prevent noise by a simple structure.

### SUMMARY

The present invention is intended to provide a multi-degree-of-freedom riding saddle, so that during riding, two seat plates can not only achieve rising and falling of front ends in an alternating reciprocation linkage mode, but also achieve entire rising and falling of the seat plates during the rising and falling of the front ends, thereby improving comfort and saving labor.

In order to resolve the foregoing technical problems, technical solutions adopted by the present invention are: a multi-degree-of-freedom riding saddle is provided, including a support portion configured to be connected to a bicycle frame and two seat plates disposed respectively corresponding to two thighs on two sides of a rider. A linkage portion is provided between the two seat plates and the support portion. The linkage portion is configured to control front ends of the two seat plates to rise and fall in a riding direction in an alternating reciprocation linkage mode and to control a front end of one of the seat plates in the riding direction pushes, during falling, the other seat plate to rise entirely.

Preferably, the linkage portion includes a first swing cross rod rotatably disposed on the support portion and a first fixed cross rod fixed onto the support portion. Two ends of the first swing cross rod may swing with a riding direction as a central axis. The first fixed cross rod is disposed horizontally and perpendicular to the riding direction. Two ends of the first swing cross rod are hinged to one end of the first connecting rod through the first universal ball joint mechanism. The other end of the first connecting rod is hinged to a seat plate on a corresponding side. A hinge point between the first connecting rod and the seat plate on the corresponding side is located at a front end of the seat plate near the riding direction. Through matching of the first swing cross rod and the two first connecting rods, a front end of one of the two seat plates in the riding direction pushes, during falling, a front end of the other seat plate to rise in the riding direction. A second connecting rod is rotatably provided at two ends of the first fixed cross rod are respectively. A middle portion of the second connecting rod is hinged to the first fixed cross rod and may be rotated with the first fixed cross rod as a central axis. One end of the second connecting rod is hinged to the seat plate on the corresponding side. A hinge point between the second connecting rod and the seat plate on the corresponding side is located on a rear end of the seat plate near the riding direction. A second swing cross rod is further rotatably provided on the support portion. Two ends of the second swing cross rod are respectively matched with one end of the two second connecting rods away from the seat plate, so that a rear end of one of the seat plates in the riding direction pushes, during falling, a rear end of the other seat plate in the riding direction to rise.

Preferably, the support portion includes a first support column. The first fixed cross rod is vertically fixed onto the top of the first support column. The first swing cross rod is rotatably disposed at a bottom end of the first support column. The second swing cross rod is rotatably disposed in a middle portion of the first support column.

Preferably, a limiting cross rod parallel to the first fixed cross rod is fixedly provided in the middle portion of the first support column. The limiting cross rod is disposed at a position at which ends of two second connecting rods away from the seat plate is opposite to a side of the second swing cross rod.

Preferably, a first rotating shaft is vertically fixed at a bottom end of the first support column. A first shaft sleeve is rotatably sleeved on the first rotating shaft. The first shaft sleeve is fixedly connected to a middle portion of the first swing cross rod. A second shaft sleeve is rotatably provided at middle portion of the first support column. The second shaft sleeve is fixedly connected to a middle portion of the second swing cross rod. A third shaft sleeve is fixedly provided at a bottom of the seat plate and at a front end in the riding direction. A third rotating shaft is rotatably provided in the third shaft sleeve. The third rotating shaft is vertically and fixedly connected to one end of the first connecting rod away from the first swing cross rod. A fourth shaft sleeve is fixedly provided at a rear end at the bottom of the seat plate in the riding direction. A fourth rotating shaft is rotatably provided in the fourth shaft sleeve. The fourth rotating shaft is fixedly connected to one end of the second connecting rod away from the second swing cross rod. Two ends of the first fixed cross rod are respectively provided with an eleventh shaft sleeve. The eleventh shaft sleeve is fixedly connected to a middle portion of the second connecting rod.

Preferably, the second connecting rod includes a hinge portion fixed onto the eleventh shaft sleeve and fixed to a fourth rotating shaft, and a deflector rod portion fixed onto the eleventh shaft sleeve and matched with a limiting cross rod. An included angle between the hinge portion and the deflector rod portion is 150°-160°.

Preferably, the first universal ball joint mechanism includes a ball fixed to one end of the first swing cross rod and a ball sleeve fixed to one end of the first connecting rod and having a cavity corresponding to a shape of the ball.

Preferably, the linkage portion includes a third swing cross rod rotatably disposed on the support portion and located at a front end in the travel direction, a fourth swing cross rod rotatably disposed on the support portion and located at a rear end in the travel direction, and a second fixed cross rod fixed onto the support portion and located between the swing cross rod and the fourth swing cross rod. Two ends of the third swing cross rod and the fourth swing cross rod may swing with the riding direction as a central axis. The second fixed cross rod is disposed horizontally and perpendicular to the riding direction. Two ends of the third swing cross rod are hinged to one end of a third connecting rod through a second universal ball joint mechanism. The other end of the third connecting rod is hinged to a seat plate on a corresponding side. A hinge point between the third connecting rod and the seat plate on the corresponding side is located at a front end of the seat plate near the riding direction. Two ends of the fourth swing cross rod are hinged to one end of a fourth connecting rod through a third universal ball joint mechanism. The other end of the fourth connecting rod is hinged to a seat plate on a corresponding side. A hinge point between the fourth connecting rod and the seat plate on the corresponding side is located at a rear end of the seat plate near the riding direction. Two ends of the second fixed cross rod are hinged to one end of a fifth connecting rod. The other end of the fifth connecting rod is hinged to a seat plate on a corresponding side. A hinge point between the fifth connecting rod and the seat plate on the corresponding side is located on the rear end of the seat plate near the riding direction.

Preferably, the support portion includes a second support column disposed along the riding direction.

Preferably, a fifth shaft sleeve is rotatably provided at a front end of the second support column in the riding direction. The fifth shaft sleeve is fixedly connected to a middle portion of the third swing cross rod. A sixth shaft sleeve is rotatably provided at a rear end of the second support column in the riding direction. The sixth shaft sleeve is fixedly connected to a middle portion of the fourth swing cross rod. A seventh shaft sleeve is respectively rotatably provided at two ends of the second fixed cross rod. The seventh shaft sleeve is fixedly connected to one end of the fifth connecting rod. An eighth rotating shaft is fixedly provided at the other end of the fifth connecting rod. The eighth rotating shaft is rotatably disposed in an eighth shaft sleeve fixed at the rear end at the bottom of the seat plate in the riding direction. One end of the fourth connecting rod away from the fourth swing cross rod is provided with a ninth shaft sleeve matched with the eighth rotating shaft for rotation. A tenth shaft sleeve is fixedly provided at a front end and at a bottom of the seat plate in the riding direction. A tenth rotating shaft is rotatably provided in the tenth shaft sleeve. The tenth rotating shaft is fixedly connected to one end of the third connecting rod away from the third swing cross rod.

### BENEFICIAL EFFECTS

The invention includes two seat plates separated from each other. Front ends of the seat plates may rise and fall in an alternating reciprocation mode during riding through linkage of the linkage portion, to prevent continuous pressure on a perineum of the rider in traditional bicycle saddle.

While driving the front ends of the two seat plates to rise and fall in the alternating reciprocation mode, the linkage portion of the present invention may achieve linkage of entire rise of one seat plate during falling of a front end of the other seat plate. Therefore, on the one hand, the entirely rising seat effectively supports a thigh exerting no force of a rider, increasing a contact area, reducing intensity of pressure, and preventing intermittent pressure on the thighs on the two sides by the two seat plates, further improving comfort of the present invention. **On** the other hand, a height of a thigh exerting no force under the support of the overall rising of the seat plate on the corresponding side is higher than a height of the thigh exerting force, forming a tendency to incline toward the thigh exerting force, reducing a barrier against force transmission from a waist for pedaling feet, and significantly saving labor.

### BRIEF DESCRIPTION OF THE DRAWINGS

FIG. 1 is a schematic three-dimensional diagram according to an implementation of the present invention.
FIG. 2 is a schematic three-dimensional diagram according to another implementation of the present invention.

Reference Numerals 1. Limiting cross rod, 2. First support column, 3. First rotating shaft, 4. First shaft sleeve, 5. First swing cross rod, 6. Second swing cross rod, 7. First universal ball joint mechanism, 701. Ball sleeve, 702. Ball, 8. Sliding rod, 9. Seat plate, 10. Third rotating shaft, 11. Third sleeve, 12. First connecting rod, 13. Fourth rotating shaft, 14. Fourth shaft sleeve, 15. Second connecting rod, 1501. Hinge portion, 1502. Deflector rod portion, 16. First fixed cross rod, 17. Second shaft sleeve, 18. Third universal ball joint mechanism, 19. Fourth swing cross rod, 20. Sixth shaft sleeve, 21. Second support column, 22. Fourth connecting rod, 23. Ninth shaft sleeve, 24. Eighth shaft sleeve, 25. Eighth rotating shaft, 26. Fifth connecting rod, 27. Seventh shaft sleeve, 28. Tenth rotating shaft, 29. Tenth shaft sleeve, 30. Third connecting rod, 31. Fifth shaft sleeve, 32. Third swing cross rod, 33. Second universal ball joint mechanism, 34. Second fixed cross rod, 35. Eleventh shaft sleeve.

### DETAILED DESCRIPTION

A multi-degree-of-freedom riding saddle of the present invention includes a support portion and two seat plates 9. Two sliding rods 8 are fixedly provided on the support portion at intervals along a travel direction. The two sliding rods 8 may be connected to a bicycle frame, so that a distance between the present invention and a handlebar may be adjusted. The two seat plates 9 are separated from each other and disposed corresponding to two thighs on two sides of a rider. Through the two separate seat plates 9, continuous pressure on a perineum of the rider by a central protrusion of a traditional bicycle riddle is prevented.

A linkage portion is further disposed on the support portion. The linkage portion is connected to the two seat plates 9 respectively. Through the linkage portion, rising and falling of front ends of the two seat plates 9 in the travel direction in an alternating reciprocation linkage mode are controlled, and a front end of one of the seat plates (9) in the travel direction during falling is controlled to push the other seat plate 9 to rise entirely. For example, a right thigh exerts force for pedaling, the right thigh exerts force and presses down, and a left thigh rises without exerting force. At this time, first the front end and the whole of a seat plate 9 on a right side fall sequentially, and then a front end and the whole of a seat plate 9 on a left side rise sequentially. As a result, the seat plate 9 on the left side supports the height-increased left thigh, and weight of a body of the rider still rests on the two seat plates 9, preventing the intermittent reciprocating and excessive pressure of the two seat plates 9 on thighs on the corresponding sides, improving comfort of the rider. In addition, a height of the left thigh is higher than a height of the right thigh under the support of the overall rising of the seat plate 9 on the left side, forming a tendency to incline toward the right thigh, reducing a barrier of force transmission from a waist to pedaling feet, significantly saving labor.

The present invention is further described in detail through two embodiments below. Obviously, the linkage portion of the present invention can adopt a plurality of structural forms. Embodiments described below are only a part of embodiments of the present invention.

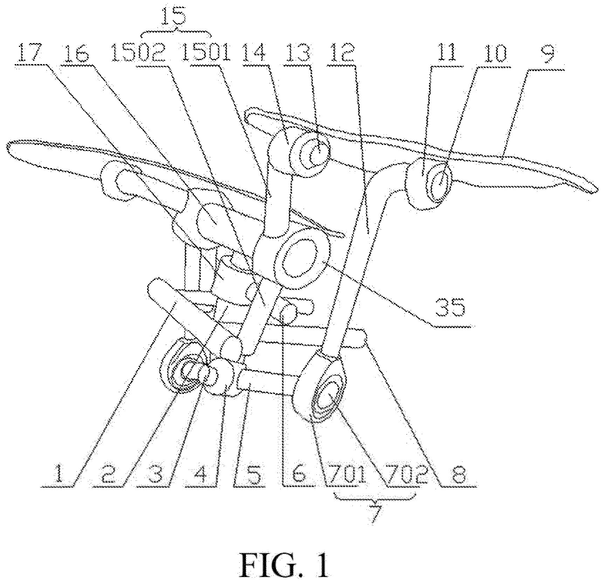

First embodiment: As shown in FIG. 1, a support portion in this embodiment includes a first support column 2. The first support column 2 is inclined vertically or slightly forward or rearward along the riding direction. Sliding rods 8 are respectively fixedly provided on two sides of the first support column 2 along the riding direction. The sliding rods 8 may be matched with and be fixedly mounted on a joint on a bicycle frame, so that a distance between the present invention and a handlebar may be adjusted.

The linkage portion includes a first swing cross rod 5 rotatably disposed at a lower end of the first support column 2 and a first fixed cross rod 16 fixed at an upper end of the first support column 2. The first swing cross rod 5 and the first fixed cross rod 16 are main linkage components of the linkage portion in this embodiment. The first fixed cross rod 16 is disposed horizontally and perpendicularly to the riding direction. A middle portion of the first fixed cross rod is fixedly connected to an upper end of the first support column 2 by welding. A first rotating shaft 3 is vertically fixed at a lower end of the first support column 2. A first shaft sleeve 4 is rotatably sleeved on the first rotating shaft 3. The first shaft sleeve 4 is fixedly connected to a middle portion of the first swing cross rod 5, so that two ends of the first swing cross rod 5 may swing up and down with the riding direction as a central axis.

Two ends of the first swing cross rod 5 are hinged to one end of the first connecting rod 12 through a first universal ball joint mechanism 7 respectively. The first universal ball joint mechanism 7 includes a ball 702 fixed to one end of the first swing cross rod 5 and a ball sleeve 701 fixed to one end of the first connecting rod 12 and having a cavity corresponding to a shape of the ball 702, so that the ball 702 may turn freely in the ball sleeve 701 without leaving the ball sleeve 701. The other end of the first connecting rod 12 is hinged to a seat plate 9 on a corresponding side. The first connecting rod 12 is hinged to the seat plate 9 on the corresponding side in the following manner: a third shaft sleeve 11 is fixedly provided at a bottom of the seat plate 9 and at a front end in the riding direction. A third rotating shaft 10 is rotatably provided in the third shaft sleeve 11. The third rotating shaft 10 is vertically and fixedly connected to one end of the first connecting rod 12 away from the first swing cross rod 5. Therefore, through matching of the first swing cross rod 5 and two first connecting rods 12, a front end of one of the seat plates 9 in the riding direction pushes, during falling, a front end of the other front seat plate 9 in the riding direction to rise.

An eleventh shaft sleeve 35 is respectively provided at two ends of the first fixed cross rod 16. The eleventh shaft sleeve 35 is fixedly connected to a middle portion of the second connecting rod 15, so that the second connecting rod 15 may be rotated with the first fixed cross rod 16 as a central axis. In other words, two ends of the second cross rod 15 may swing freely toward or opposite to the riding direction. An upper end of the second connecting rod 15 is hinged to a seat plate 9 on a corresponding side in the following manner: A fourth shaft sleeve 14 is fixed at a bottom of the seat plate 9 and at a rear end in the riding direction. A fourth rotating shaft 13 is rotatably provided in the fourth shaft sleeve 14. The fourth rotating shaft 13 is vertically and fixedly connected to the upper end of the second connecting rod 15. In this embodiment, a second swing cross rod 6 and a limiting cross rod 1 are respectively provided on two sides of a lower end of the second connecting rod 15. A middle portion of the second swing cross rod 6 is fixed onto the second shaft sleeve 17. The second shaft sleeve 17 is rotatably disposed in the middle portion of the first support column 2. The limiting cross rod 1 is parallel to the first fixed cross rod 16. A middle portion of the first fixed cross rod is fixedly connected to the first support column 2. A travel space at which ends of two second connecting rods 15 away from the seat plate 9 moves is formed between the second swing cross rod 6 and the limiting cross rod 1, so that two ends of the second swing cross rod 6 may be respectively matched with ends of the two second connecting rods 15 away from the seat plate 9. For example, a right thigh still exerts force for pedaling during riding, a front end of a seat plate 9 on a right side falls and a front end of a seat plate 9 on a left side rises through the linkage of the first swing cross rod 5 and the two first connecting rods 12. As the right thigh continues to press down, a rear end of the seat plate 9 on the right side also falls, causing the seat plate 9 on the right side to fall entirely. At this time, a lower end of the second connecting rod 15 on the right side pushes a right end of the second swing cross rod 6, so that the second swing cross rod 6 rotates counterclockwise. Then, a left end of the second swing cross rod 6 pushes a lower end of the second connecting rod 15 on the left side, so that a rear end of the seat plate 9 on the left side rises, further causing the seat plate 9 on the left side to rise entirely to match the seat plate 9 on the right side that falls entirely, so that the rider is inclined toward the right side.

The second connecting rod 15 in this embodiment includes a hinge portion 1501 fixed onto an eleventh shaft sleeve 35 and fixed to a fourth rotating shaft 13, and a deflector rod portion 1502 fixed onto the eleventh shaft sleeve 35 and matched with the limiting cross rod 1. An included angle between the hinge portion 1501 and the deflector rod portion 1502 is 150°-160°, so that a space can be utilized effectively and a height difference between the seat plates 9 on the left and right sides can be increased.

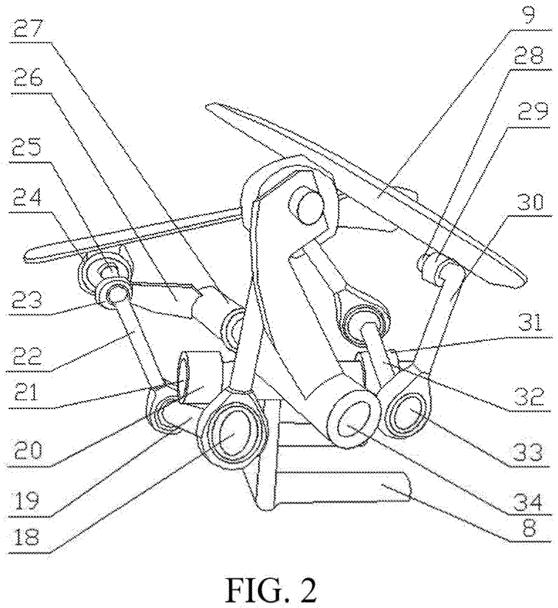

Second embodiment: As shown in FIG. 2, a support portion in this embodiment includes a second support column 21 disposed along a riding direction or with both ends slightly inclined upward or downward. Sliding rods 8 are respectively fixedly provided on two sides of the second support column 21 along the riding direction. The sliding rods 8 may be matched with and be fixedly mounted on a joint on a bicycle frame, so that a distance between the present invention and a handlebar may be adjusted.

The linkage portion includes a third swing cross rod 32 rotatably disposed at a front end of the second support column 21, a fourth swing cross rod 19 rotatably disposed at a rear end of the second support portion, and a second fixed cross rod 34 fixed onto the second support column 21 and located between the third swing cross rod 32 and the fourth swing cross rod 19. The third swing cross rod 32, the fourth swing cross rod 19, and the second fixed cross rod 34 are main components of the linkage portion in this embodiment. A fifth shaft sleeve 31 is rotatably provided at a front end of the second support column 21. The fifth shaft sleeve 31 is fixedly connected to a middle portion of the third swing cross rod 32. A sixth shaft sleeve 20 is rotatably provided at a rear end of the second support column 21. The sixth shaft sleeve 20 is fixedly connected to a middle portion of the fourth swing cross rod 19, so that two ends of the third swing cross rod 32 and the fourth swing cross rod 19 can swing up and down with the riding direction as a central axis. The second fixed cross rod 34 is disposed horizontally and perpendicularly to the riding direction. A middle portion of the second fixed cross rod is fixedly connected to the second support column 21 by welding.

Two ends of the third swing cross rod 32 are hinged to one end of a third connecting rod 30 through a second universal ball joint mechanism 33. The second universal ball joint mechanism 33 is similar to the first universal ball joint mechanism 7 in the first embodiment. The other end of the third connecting rod 30 is hinged to a seat plate 9 on a corresponding side in the following manner: A tenth shaft sleeve 29 is fixedly provided and at a bottom of the seat plate 9 and at a front end in the riding direction. A tenth rotating shaft 28 is rotatably disposed in the tenth shaft sleeve 29. The tenth rotating shaft 28 is vertically and fixedly connected to one end of the third connecting rod 30 away from the third swing cross rod 32.

Two ends of the fourth swing cross rod 19 are respectively hinged to one end of a fourth connecting rod 22 through a third universal ball joint mechanism 18. The third universal ball joint mechanism 18 is similar to the first universal ball joint mechanism 7 in the first embodiment. The other end of the fourth connecting rod 22 is hinged to the seat plate 9 on the corresponding side.

A seventh shaft sleeve 27 is respectively rotatably provided at two ends of the second fixed cross rod 34. The seventh shaft sleeve 27 is fixedly connected to one end of the fifth connecting rod 26. The other end of the fifth connecting rod 26 is hinged to a seat plate 9 on the corresponding side. A joint point between the fifth connecting rod 26 and the fourth connecting rod 22 and the seat plate 9 on the corresponding side is a common node. The hinging is performed in the following manner: An eighth rotating shaft 25 is fixedly provided at one end of the fifth connecting rod 26 away from the seventh shaft sleeve 27. The eighth rotating shaft 25 is rotatably disposed in the eighth shaft sleeve 24 fixed at the rear end at the bottom of the seat plate 9 in the riding direction. A ninth shaft sleeve 23 rotatably matched with the eighth rotating shaft 25 is provided at one end of the fourth connecting rod 22 away from the fourth swing cross rod 19.

During implementation of the second embodiment, for example, the right thigh still exerts force for pedaling during riding. Through the linkage of the third swing cross rod 32 and the two third connecting rods 30, after a front end of the seat plate 9 on the right side falls and a front end of the seat plate 9 on the left side rises, as the right thigh continually presses down, a rear end of the seat plate 9 on the right side also falls, so that the seat plate 9 on the right side falls entirely. At this time, the fourth connecting rod 22 on the right side is matched with the fifth connecting rod 26, so that a lower end of the fourth connecting rod 22 pushes a right end of the fourth swing cross rod 19, and the fourth swing cross rod 19 rotates clockwise. Then, a left end of the fourth swing cross rod 19 pushes a lower end of the fourth connecting rod 22 on the left side, causing a rear end of the seat plate 9 on the left side to rise, further causing the seat plate 9 on the left side to rise entirely, to be matched with the seat plate 9 on the right side that falls entirely, thereby causing the rider to form a tendency to incline toward the right side.

**In** the two embodiments of the present invention, a thrust bearing may be disposed between each rotating shaft and teach shaft sleeve, and between each support column and each shaft sleeve, so as to reduce frictional pause and improve flexibility of linkage of various accessories in the present invention.

## Claims

1. A multi-degree-of-freedom riding saddle, comprising a support portion configured to be connected to a bicycle frame and two seat plates (9) disposed respectively corresponding to two thighs on two sides of a rider, each seat plate comprising a front end and a rear end relative to a riding direction, wherein a linkage portion is provided between the two seat plates (9) and the support portion, the linkage portion being configured to control front ends of the two seat plates (9) to rise and fall in an alternating reciprocation linkage mode and control the front end of one of the seat plates (9) to push, during falling, the other seat plate (9) to rise entirely,
wherein the linkage portion comprises a first swing cross rod (5) rotatably disposed on the support portion and a first fixed cross rod (16) fixed onto the support portion, wherein two ends of the first swing cross rod (5) can swing with the riding direction as a central axis, and the first fixed cross rod (16) is disposed horizontally and perpendicular to the riding direction; **characterised in that** two ends of the first swing cross rod (5) are hinged to one end of the two first connecting rods (12) through a first universal ball joint mechanism (7), wherein the other end of the first connecting rod (12) is hinged to a seat plate (9) on a corresponding side, a hinge point between the first connecting rod (12) and the seat plate (9) on the corresponding side being located on a front end of the seat plate (9) near the riding direction, and through matching of the first swing cross rod (5) and the two first connecting rods (12), a front end of one of the seat plates (9) is configured to push, during falling, a front end of the other seat plate (9) to rise; a second connecting rod (15) is respectively rotatably provided at two ends of the first fixed cross rod (16), wherein a middle portion of the second connecting rod (15) is hinged to the first fixed cross rod (16) and is rotatable with the first fixed cross rod (16) as a central axis, one end of the second connecting rod (15) is hinged to the seat plate (9) on the corresponding side, a hinge point between the second connecting rod (15) and the seat plate (9) on the corresponding side being located on a rear end of the seat plate (9), and a second swing cross rod (6) is further rotatably provided on the support portion, wherein two ends of the second swing cross rod (6) are respectively matched with ends of the two second connecting rods (15) away from the seat plate (9), so that a rear end of one of the seat plates (9) is configured to push, during falling, a rear end of the other seat plate (9) to rise.

2. The multi-degree-of-freedom riding saddle according to claim 1, wherein the support portion comprises a first support column (2), the first fixed cross rod (16) being vertically fixed onto the top of the first support column (2), the first swing cross rod (5) being rotatably disposed at a bottom end of the first support column (2), and the second swing cross rod (6) being rotatably disposed in a middle portion of the first support column (2).

3. The multi-degree-of-freedom riding saddle according to claim 2, wherein a limiting cross rod (1) parallel to the first fixed cross rod (16) is fixedly provided in the middle portion of the first support column (2), the limiting cross rod (1) being disposed at a position at which one end of two second connecting rods (15) away from the seat plate (9) is opposite to a side of the second swing cross rod (6).

4. The multi-degree-of-freedom riding saddle according to claim 3, wherein a first rotating shaft (3) is vertically fixed at the bottom end of the first support column (2), a first shaft sleeve (4) being rotatably sleeved on the first rotating shaft (3), the first shaft sleeve (4) being fixedly connected to a middle portion of the first swing cross rod (5); a second shaft sleeve (17) is rotatably provided at a middle portion of the first support column (2), the second shaft sleeve (17) being fixedly connected to a middle portion of the second swing cross rod (6); a front end at a bottom of the seat plate (9) is fixedly provided with a third shaft sleeve (11), a third rotating shaft (10) being rotatably provided in the third shaft sleeve (11), and the third rotating shaft (10) being fixedly connected to one end of the first connecting rod (12) away from the first swing cross rod (5); a rear end at the bottom of the seat plate (9) is fixedly provided with a fourth shaft sleeve (14), a fourth rotating shaft (13) being rotatably provided in the fourth shaft sleeve (14), and the fourth rotating shaft (13) being fixedly connected to one end of the second connecting rod (15) away from the second swing cross rod (6); and an eleventh shaft sleeve (35) is respectively rotatably provided at two ends of the first fixed cross rod (16), the eleventh shaft sleeve (35) being fixedly connected to a middle portion of the second connecting rod (15).

5. The multi-degree-of-freedom riding saddle according to claim 4, wherein the second connecting rod (15) comprises a hinge portion (1501) fixed onto the eleventh shaft sleeve (35) and fixed to a fourth rotating shaft (13), and a deflector rod portion (1502) fixed onto the eleventh shaft sleeve (35) and matched with a limiting cross rod (1), an included angle between the hinge portion (1501) and the deflector rod portion (1502) being 150-160°

6. The multi-degree-of-freedom riding saddle according to claim 1, wherein the first universal ball joint mechanism (7) comprises a ball (702) fixed to one end of the first swing cross rod (5) and a ball sleeve (701) fixed to one end of the first connecting rod (12) and having a cavity corresponding to a shape of the ball (702).

7. A multi-degree-of-freedom riding saddle, comprising a support portion configured to be connected to a bicycle frame and two seat plates (9) disposed respectively corresponding to two thighs on two sides of a rider, each seat plate comprising a front end and a rear end relative to a riding direction, wherein a linkage portion is provided between the two seat plates (9) and the support portion, the linkage portion being configured to control front ends of the two seat plates (9) to rise and fall in an alternating reciprocation linkage mode and control a front end of one of the seat plates (9) in the riding direction to push, during falling, the other seat plate (9) to rise entirely,
and **characterised in that** the linkage portion comprises a third swing cross rod (32) rotatably disposed on the support portion and located at a front end of a travel direction, a fourth swing cross rod (19) rotatably disposed on the support portion and located at a rear end of the travel direction, and a second fixed cross rod (34) fixed onto the support portion and located between the third swing cross rod (32) and the fourth swing cross rod (19), wherein two ends of the third swing cross rod (32) and the fourth swing cross rod (19) are configured to swing with the riding direction as a central axis, and the second fixed cross rod (34) is disposed horizontally and perpendicular to the riding direction; two ends of the third swing cross rod (32) are respectively hinged to one end of a third connecting rod (30) through a second universal ball joint mechanism (33), wherein the other end of the third connecting rod (30) is hinged to a seat plate (9) on a corresponding side, a hinge point between the third connecting rod (30) and the seat plate (9) on the corresponding side being located on a front end of the seat plate (9) near the riding direction; two ends of the fourth swing cross rod (19) are respectively hinged to one end of the fourth connecting rod (22) through a third universal ball joint mechanism (18), and the other end of the fourth connecting rod (22) is hinged to the seat plate (9) on a corresponding side, a hinge point between the fourth connecting rod (22) and the seat plate (9) on the corresponding side being located at a rear end on the seat plate (9) near the riding direction; and two ends of the second fixed cross rod (34) are respectively hinged to one end of a fifth connecting rod (26), wherein the other end of the fifth connecting rod (26) is hinged to a seat plate (9) on a corresponding side, a hinge point between the fifth connecting rod (26) and the seat plate (9) on the corresponding side being located at a rear end of the seat plate (9) near the riding direction.

8. The multi-degree-of-freedom riding saddle according to claim 7, wherein the support portion comprises a second support column (21) disposed along the riding direction.

9. The multi-degree-of-freedom riding saddle according to claim 8, wherein a fifth shaft sleeve (31) is rotatably provided at a front end of the second support column (21) in the riding direction, the fifth shaft sleeve (31) being fixedly connected to a middle portion of the third swing cross rod (32); a sixth shaft sleeve (20) is rotatably provided at a rear end of the second support column (21) in the riding direction, the sixth shaft sleeve (20) being fixedly connected to a middle portion of the fourth swing cross rod (19); a seventh shaft sleeve (27) is rotatably provided at two ends of the second fixed cross rod (34), the seventh shaft sleeve (27) being fixedly connected to one end of the fifth connecting rod (26), the other end of the fifth connecting rod (26) being fixedly provided with an eighth rotating shaft (25), wherein the eighth rotating shaft (25) is rotatably disposed in an eighth sleeve (24) fixed at a bottom of the seat plate (9) and located at the rear end in the riding direction, and one end of the fourth connecting rod (22) away from the fourth swing cross rod (19) is provided with a ninth shaft sleeve (23) rotatably matched with the eighth rotating shaft (25); and a front end at the bottom of the seat plate (9) in the riding direction is fixedly provided with a tenth shaft sleeve (29), a tenth rotating shaft (28) being rotatably provided in the tenth shaft sleeve (29), wherein the tenth rotating shaft (28) is fixedly connected to an end of the third connecting rod (30) away from the third swing cross rod (32).

## Patentansprüche

1. Mehr-Freiheitsgrad-Fahrradsattel, umfassend einen Stützabschnitt, der dazu konfiguriert ist, mit einem Fahrradrahmen verbunden zu werden, und zwei Sitzplatten (9), die jeweils entsprechend den zwei Oberschenkeln auf zwei Seiten eines Fahrers eingerichtet sind, wobei jede Sitzplatte relativ zu einer Fahrtrichtung ein vorderes Ende und ein hinteres Ende umfasst, wobei ein Verbindungsabschnitt zwischen den zwei Sitzplatten (9) und dem Stützabschnitt bereitgestellt ist, wobei der Verbindungsabschnitt dazu konfiguriert ist, vordere Enden der zwei Sitzplatten (9) zu steuern, um sich in einem alternierenden Hin- und Her-Verbindungsmodus zu heben und zu senken, und das vordere Ende einer der Sitzplatten (9) zu steuern, um während des Senkens die andere Sitzplatte (9) zu drücken, damit sie sich vollständig anhebt,
wobei der Verbindungsabschnitt eine erste Schwenkquerstange (5), die drehbar an dem Stützabschnitt eingerichtet ist, und eine erste feste Querstange (16), die an dem Stützabschnitt befestigt ist, umfasst, wobei zwei Enden der ersten Schwenkquerstange (5) mit der Fahrtrichtung als eine Mittelachse schwenken können und die erste feste Querstange (16) horizontal und senkrecht zu der Fahrtrichtung eingerichtet ist; **dadurch gekennzeichnet, dass**
zwei Enden der ersten Schwenkquerstange (5) durch einen ersten Universal-Kugelgelenkmechanismus (7) an ein Ende von zwei ersten Verbindungsstangen (12) angelenkt sind, wobei das andere Ende der ersten Verbindungsstange (12) an eine Sitzplatte (9) auf einer entsprechenden Seite angelenkt ist, wobei sich ein Gelenkpunkt zwischen der ersten Verbindungsstange (12) und der Sitzplatte (9) auf der entsprechenden Seite an einem vorderen Ende der Sitzplatte (9) nahe der Fahrtrichtung befindet, und durch Zusammenwirken der ersten Schwenkquerstange (5) und der zwei ersten Verbindungsstangen (12) ein vorderes Ende einer der Sitzplatten (9) dazu konfiguriert ist, während des Senkens ein vorderes Ende der anderen Sitzplatte (9) zu drücken, damit es sich anhebt; eine zweite Verbindungsstange (15) jeweils drehbar an zwei Enden der ersten festen Querstange (16) bereitgestellt ist, wobei ein mittlerer Abschnitt der zweiten Verbindungsstange (15) an die erste feste Querstange (16) angelenkt ist und mit der ersten festen Querstange (16) als eine Mittelachse drehbar ist, ein Ende der zweiten Verbindungsstange (15) an die Sitzplatte (9) auf der entsprechenden Seite angelenkt ist, wobei sich ein Gelenkpunkt zwischen der zweiten Verbindungsstange (15) und der Sitzplatte (9) auf der entsprechenden Seite an einem hinteren Ende der Sitzplatte (9) befindet, und eine zweite Schwenkquerstange (6) ferner drehbar an dem Stützabschnitt bereitgestellt ist, wobei zwei Enden der zweiten Schwenkquerstange (6) jeweils mit von der Sitzplatte (9) abgewandten Enden der zwei zweiten Verbindungsstangen (15) zusammenwirken, sodass ein hintereres Ende einer der Sitzplatten (9) dazu konfiguriert ist, während des Senkens ein hinteres Ende der anderen Sitzplatte (9) zu drücken, damit es sich anhebt.

2. Mehr-Freiheitsgrad-Fahrradsattel nach Anspruch 1, wobei der Stützabschnitt eine erste Stützsäule (2) umfasst, wobei die erste feste Querstange (16) vertikal auf der Oberseite der ersten Stützsäule (2) befestigt ist, wobei die erste Schwenkquerstange (5) drehbar an einem unteren Ende der ersten Stützsäule (2) eingerichtet ist und die zweite Schwenkquerstange (6) drehbar in einem mittleren Abschnitt der ersten Stützsäule (2) eingerichtet ist.

3. Mehr-Freiheitsgrad-Fahrradsattel nach Anspruch 2, wobei eine Begrenzungsquerstange (1), die parallel zu der ersten festen Querstange (16) ist, fest in dem mittleren Abschnitt der ersten Stützsäule (2) bereitgestellt ist, wobei die Begrenzungsquerstange (1) an einer Position eingerichtet ist, an der ein von der Sitzplatte (9) abgewandtes Ende von zwei zweiten Verbindungsstangen (15) einer Seite der zweiten Schwenkquerstange (6) gegenüberliegt.

4. Mehr-Freiheitsgrad-Fahrradsattel nach Anspruch 3, wobei eine erste rotierende Welle (3) vertikal an dem unteren Ende der ersten Stützsäule (2) befestigt ist, wobei eine erste Wellenhülse (4) drehbar auf die erste rotierende Welle (3) geschoben ist, wobei die erste Wellenhülse (4) fest mit einem mittleren Abschnitt der ersten Schwenkquerstange (5) verbunden ist; eine zweite Wellenhülse (17) drehbar an einem mittleren Abschnitt der ersten Stützsäule (2) bereitgestellt ist, wobei die zweite Wellenhülse (17) fest mit einem mittleren Abschnitt der zweiten Schwenkquerstange (6) verbunden ist; ein vorderes Ende an einer Unterseite der Sitzplatte (9) fest mit einer dritten Wellenhülse (11) versehen ist, wobei eine dritte rotierende Welle (10) drehbar in der dritten Wellenhülse (11) bereitgestellt ist, und die dritte rotierende Welle (10) fest mit einem von der ersten Schwenkquerstange (5) abgewandten Ende der ersten Verbindungsstange (12) verbunden ist; ein hinteres Ende an der Unterseite der Sitzplatte (9) fest mit einer vierten Wellenhülse (14) versehen ist, wobei eine vierte rotierende Welle (13) drehbar in der vierten Wellenhülse (14) bereitgestellt ist, und die vierte rotierende Welle (13) fest mit einem von der zweiten Schwenkquerstange (6) abgewandten Ende der zweiten Verbindungsstange (15) verbunden ist; und eine elfte Wellenhülse (35) jeweils drehbar an zwei Enden der ersten festen Querstange (16) bereitgestellt ist, wobei die elfte Wellenhülse (35) fest mit einem mittleren Abschnitt der zweiten Verbindungsstange (15) verbunden ist.

5. Mehr-Freiheitsgrad-Fahrradsattel nach Anspruch 4, wobei die zweite Verbindungsstange (15) einen Gelenkabschnitt (1501), der an der elften Wellenhülse (35) befestigt und an einer vierten rotierenden Welle (13) befestigt ist, und einen Abweiserstangenabschnitt (1502), der an der elften Wellenhülse (35) befestigt und mit einer Begrenzungsquerstange (1) zusammenpassend ist, umfasst, wobei ein eingeschlossener Winkel zwischen dem Gelenkabschnitt (1501) und dem Abweiserstangenabschnitt (1502) 150-160° beträgt.

6. Mehr-Freiheitsgrad-Fahrradsattel nach Anspruch 1, wobei der erste Universal-Kugelgelenkmechanismus (7) eine Kugel (702), die an einem Ende der ersten Schwenkquerstange (5) befestigt ist, und eine Kugelhülse (701) umfasst, die an einem Ende der ersten Verbindungsstange (12) befestigt ist und einen Hohlraum aufweist, der einer Form der Kugel (702) entspricht.

7. Mehr-Freiheitsgrad-Fahrradsattel, umfassend einen Stützabschnitt, der dazu konfiguriert ist, mit einem Fahrradrahmen verbunden zu werden, und zwei Sitzplatten (9), die jeweils entsprechend zwei Oberschenkeln auf zwei Seiten eines Fahrers eingerichtet sind, wobei jede Sitzplatte relativ zu einer Fahrtrichtung ein vorderes Ende und ein hinteres Ende umfasst, wobei ein Verbindungsabschnitt zwischen den zwei Sitzplatten (9) und dem Stützabschnitt bereitgestellt ist, wobei der Verbindungsabschnitt dazu konfiguriert ist, vordere Enden der zwei Sitzplatten (9) zu steuern, um sich in einem alternierenden Hin- und Her-Verbindungsmodus zu heben und zu senken, und ein vorderes Ende einer der Sitzplatten (9) in der Fahrtrichtung zu steuern, um während des Senkens die andere Sitzplatte (9) zu drücken, damit sie sich vollständig anhebt,
und **dadurch gekennzeichnet, dass**
der Verbindungsabschnitt eine dritte Schwenkquerstange (32), die drehbar an dem Stützabschnitt eingerichtet ist und sich an einem vorderen Ende einer Bewegungsrichtung befindet, eine vierte Schwenkquerstange (19), die drehbar an dem Stützabschnitt eingerichtet ist und sich an einem hinteren Ende der Bewegungsrichtung befindet, und eine zweite feste Querstange (34), die an dem Stützabschnitt befestigt ist und sich zwischen der dritten Schwenkquerstange (32) und der vierten Schwenkquerstange (19) befindet, umfasst, wobei zwei Enden der dritten Schwenkquerstange (32) und der vierten Schwenkquerstange (19) dazu konfiguriert sind, mit der Fahrtrichtung als eine Mittelachse zu schwenken, und die zweite feste Querstange (34) horizontal und senkrecht zu der Fahrtrichtung eingerichtet ist; zwei Enden der dritten Schwenkquerstange (32) durch einen zweiten Universal-Kugelgelenkmechanismus (33) jeweils an ein Ende einer dritten Verbindungsstange (30) angelenkt sind, wobei das andere Ende der dritten Verbindungsstange (30) an eine Sitzplatte (9) auf einer entsprechenden Seite angelenkt ist, wobei sich ein Gelenkpunkt zwischen der dritten Verbindungsstange (30) und der Sitzplatte (9) auf der entsprechenden Seite an einem vorderen Ende der Sitzplatte (9) nahe der Fahrtrichtung befindet; zwei Enden der vierten Schwenkquerstange (19) durch einen dritten Universal-Kugelgelenkmechanismus (18) jeweils an ein Ende der vierten Verbindungsstange (22) angelenkt sind, und das andere Ende der vierten Verbindungsstange (22) an die Sitzplatte (9) auf einer entsprechenden Seite angelenkt ist, wobei sich ein Gelenkpunkt zwischen der vierten Verbindungsstange (22) und der Sitzplatte (9) auf der entsprechenden Seite an einem hinteren Ende an der Sitzplatte (9) nahe der Fahrtrichtung befindet; und zwei Enden der zweiten festen Querstange (34) jeweils an ein Ende einer fünften Verbindungsstange (26) angelenkt sind, wobei das andere Ende der fünften Verbindungsstange (26) an eine Sitzplatte (9) auf einer entsprechenden Seite angelenkt ist, wobei sich ein Gelenkpunkt zwischen der fünften Verbindungsstange (26) und der Sitzplatte (9) auf der entsprechenden Seite an einem hinteren Ende der Sitzplatte (9) nahe der Fahrtrichtung befindet.

8. Mehr-Freiheitsgrad-Fahrradsattel nach Anspruch 7, wobei der Stützabschnitt eine zweite Stützsäule (21) umfasst, die entlang der Fahrtrichtung eingerichtet ist.

9. Mehr-Freiheitsgrad-Fahrradsattel nach Anspruch 8, wobei eine fünfte Wellenhülse (31) drehbar an einem vorderen Ende der zweiten Stützsäule (21) in der Fahrtrichtung bereitgestellt ist, wobei die fünfte Wellenhülse (31) fest mit einem mittleren Abschnitt der dritten Schwenkquerstange (32) verbunden ist; eine sechste Wellenhülse (20) drehbar an einem hinteren Ende der zweiten Stützsäule (21) in der Fahrtrichtung bereitgestellt ist, wobei die sechste Wellenhülse (20) fest mit einem mittleren Abschnitt der vierten Schwenkquerstange (19) verbunden ist; eine siebte Wellenhülse (27) drehbar an zwei Enden der zweiten festen Querstange (34) bereitgestellt ist, wobei die siebte Wellenhülse (27) fest mit einem Ende der fünften Verbindungsstange (26) verbunden ist, wobei das andere Ende der fünften Verbindungsstange (26) fest mit einer achten rotierenden Welle (25) versehen ist, wobei die achte rotierende Welle (25) drehbar in einer achten Hülse (24) eingerichtet ist, die an einer Unterseite der Sitzplatte (9) befestigt ist und sich in der Fahrtrichtung an dem hinteren Ende befindet, und ein von der vierten Schwenkquerstange (19) abgewandtes Ende der vierten Verbindungsstange (22) mit einer neunten Wellenhülse (23) versehen ist, die drehbar mit der achten rotierenden Welle (25) zusammenpasst; und ein vorderes Ende an der Unterseite der Sitzplatte (9) in der Fahrtrichtung fest mit einer zehnten Wellenhülse (29) versehen ist, wobei eine zehnte rotierende Welle (28) drehbar in der zehnten Wellenhülse (29) bereitgestellt ist, wobei die zehnte rotierende Welle (28) fest mit einem von der dritten Schwenkquerstange (32) abgewandten Ende der dritten Verbindungsstange (30) verbunden ist.

## Revendications

1. Selle à multiples degrés de liberté, comprenant une partie de support configurée pour être reliée à un cadre de vélo et deux plaques d'assise (9) disposées respectivement en correspondance avec deux cuisses de part et d'autre d'un cycliste, chaque plaque d'assise comprenant une extrémité avant et une extrémité arrière par rapport à une direction de la marche, dans laquelle une partie de liaison est disposée entre les deux plaques d'assise (9) et la partie de support, la partie de liaison étant configurée pour commander à des extrémités avant des deux plaques d'assise (9) de monter et descendre selon un mode de liaison en va-et-vient alternatif, et pour commander à l'extrémité avant de l'une des plaques d'assise (9) de pousser, lors de la descente, l'autre plaque d'assise (9) à se relever complètement,
dans laquelle la partie de liaison comprend une première tige transversale pivotante (5) disposée de manière rotative sur la partie de support et une première tige transversale fixe (16) fixée sur la partie de support, dans laquelle deux extrémités de la première tige transversale pivotante (5) peuvent pivoter autour de la direction de la marche comme axe central, et la première tige transversale fixe (16) est disposée horizontalement et perpendiculairement à la direction de la marche ; **caractérisée en ce que**
deux extrémités de la première tige transversale pivotante (5) sont articulées à une extrémité des deux premières bielles (12) par l'intermédiaire d'un premier mécanisme à rotule universel (7), dans laquelle l'autre extrémité de la première bielle (12) est articulée à une plaque d'assise (9) sur un côté correspondant, un point d'articulation entre la première bielle (12) et la plaque d'assise (9) sur le côté correspondant étant situé à une extrémité avant de la plaque d'assise (9) près de la direction de la marche et, en mettant en correspondance la première tige transversale pivotante (5) et les deux premières bielles (12), une extrémité avant de l'une des plaques d'assise (9) est configurée pour pousser, lors de la descente, une extrémité avant de l'autre plaque d'assise (9) à se relever ; une deuxième bielle (15) est disposée de manière respectivement rotative à deux extrémités de la première tige transversale fixe (16), dans laquelle une partie intermédiaire de la deuxième bielle (15) est articulée à la première tige transversale fixe (16) et peut tourner autour de la première tige transversale fixe (16) comme axe central, une extrémité de la deuxième bielle (15) est articulée à la plaque d'assise (9) sur le côté correspondant, un point d'articulation entre la deuxième bielle (15) et la plaque d'assise (9) sur le côté correspondant étant situé à une extrémité arrière de la plaque d'assise (9), et une deuxième tige transversale pivotante (6) est en outre disposée de manière rotative sur la partie de support, dans laquelle deux extrémités de la deuxième tige transversale pivotante (6) sont respectivement mises en correspondance avec des extrémités des deux deuxièmes bielles (15) à distance de la plaque d'assise (9), de sorte qu'une extrémité arrière de l'une des plaques d'assise (9) soit configurée pour pousser, lors de la descente, une extrémité arrière de l'autre plaque d'assise (9) à se relever.

2. Selle à multiples degrés de liberté selon la revendication 1, dans laquelle la partie de support comprend une première colonne de support (2), la première tige transversale fixe (16) étant fixée verticalement sur le dessus de la première colonne de support (2), la première tige transversale pivotante (5) étant disposée de manière rotative à une extrémité inférieure de la première colonne de support (2), et la deuxième tige transversale pivotante (6) étant disposée de manière rotative dans une partie intermédiaire de la première colonne de support (2).

3. Selle à multiples degrés de liberté selon la revendication 2, dans laquelle une tige transversale de limitation (1) parallèle à la première tige transversale fixe (16) est disposée de manière fixe dans la partie intermédiaire de la première colonne de support (2), la tige transversale de limitation (1) étant disposée dans une position dans laquelle une extrémité de deux deuxièmes bielles (15) à distance de la plaque d'assise (9) est opposée à un côté de la deuxième tige transversale pivotante (6).

4. Selle à multiples degrés de liberté selon la revendication 3, dans laquelle un premier arbre rotatif (3) est fixé verticalement au niveau de l'extrémité inférieure de la première colonne de support (2), un premier manchon d'arbre (4) étant emmanché de manière rotative sur le premier arbre rotatif (3), le premier manchon d'arbre (4) étant relié de manière fixe à une partie intermédiaire de la première tige transversale pivotante (5) ; un deuxième manchon d'arbre (17) est disposé de manière rotative sur une partie intermédiaire de la première colonne de support (2), le deuxième manchon d'arbre (17) étant relié de manière fixe à une partie intermédiaire de la deuxième tige transversale pivotante (6) ; une extrémité avant, au niveau d'une partie inférieure de la plaque d'assise (9), est munie de manière fixe d'un troisième manchon d'arbre (11), un troisième arbre rotatif (10) étant disposé de manière rotative dans le troisième manchon d'arbre (11), et le troisième arbre rotatif (10) étant relié de manière fixe à une extrémité de la première bielle (12) à distance de la première tige transversale pivotante (5) ; une extrémité arrière au niveau de la partie inférieure de la plaque d'assise (9) est munie de manière fixe d'un quatrième manchon d'arbre (14), un quatrième arbre rotatif (13) étant disposé de manière rotative dans le quatrième manchon d'arbre (14), et le quatrième arbre rotatif (13) étant relié de manière fixe à une extrémité de la deuxième bielle (15) à distance de la deuxième tige transversale pivotante (6) ; et un onzième manchon d'arbre (35) est disposé de manière respectivement rotative à deux extrémités de la première tige transversale fixe (16), le onzième manchon d'arbre (35) étant relié de manière fixe à une partie intermédiaire de la deuxième bielle (15).

5. Selle à multiples degrés de liberté selon la revendication 4, dans laquelle la deuxième bielle (15) comprend une partie articulée (1501) fixée sur le onzième manchon d'arbre (35) et fixée à un quatrième arbre rotatif (13), et une partie de tige de déviation (1502) fixée sur le onzième manchon d'arbre (35) et mise en correspondance avec une tige transversale de limitation (1), un angle inclus entre la partie articulée (1501) et la partie de tige de déviation (1502) étant de 150 à 160°.

6. Selle à multiples degrés de liberté selon la revendication 1, dans laquelle le premier mécanisme à rotule universel (7) comprend une rotule (702) fixée à une extrémité de la première tige transversale pivotante (5) et un manchon à rotule (701) fixé à une extrémité de la première bielle (12) et ayant une cavité correspondant à une forme de la rotule (702).

7. Selle à multiples degrés de liberté, comprenant une partie de support configurée pour être reliée à un cadre de vélo et deux plaques d'assise (9) disposées respectivement en correspondance avec deux cuisses de part et d'autre d'un cycliste, chaque plaque d'assise comportant une extrémité avant et une extrémité arrière par rapport à une direction de la marche, dans laquelle une partie de liaison est prévue entre les deux plaques d'assise (9) et la partie de support, la partie de liaison étant configurée pour commander à des extrémités avant des deux plaques d'assise (9) de monter et descendre selon un mode de liaison en va-et-vient alternatif, et pour commander à une extrémité avant de l'une des plaques d'assise (9) dans la direction de la marche de pousser, lors de la descente, l'autre plaque d'assise (9) à se relever complètement,
et **caractérisée en ce que**
la partie de liaison comprend une troisième tige transversale pivotante (32) disposée de manière rotative sur la partie de support et située à une extrémité avant d'une direction de déplacement, une quatrième tige transversale pivotante (19) disposée de manière rotative sur la partie de support et située à une extrémité arrière de la direction de déplacement, et une deuxième tige transversale fixe (34) fixée sur la partie de support et située entre la troisième tige transversale pivotante (32) et la quatrième tige transversale pivotante (19), dans laquelle deux extrémités de la troisième tige transversale pivotante (32) et de la quatrième tige transversale pivotante (19) sont configurées pour pivoter avec la direction de la marche comme axe central, et la deuxième tige transversale fixe (34) est disposée horizontalement et perpendiculairement à la direction de la marche ; deux extrémités de la troisième tige transversale pivotante (32) sont articulées respectivement à une extrémité d'une troisième bielle (30) par l'intermédiaire d'un deuxième mécanisme à rotule universel (33), dans laquelle l'autre extrémité de la troisième bielle (30) est articulée à une plaque d'assise (9) sur un côté correspondant, un point d'articulation entre la troisième bielle (30) et la plaque d'assise (9) sur le côté correspondant étant situé sur une extrémité avant de la plaque d'assise (9) près de la direction de la marche ; deux extrémités de la quatrième tige transversale pivotante (19) sont articulées respectivement à une extrémité de la quatrième bielle (22) par l'intermédiaire d'un troisième mécanisme à rotule universel (18), et l'autre extrémité de la quatrième bielle (22) est articulée à la plaque d'assise (9) sur un côté correspondant, un point d'articulation entre la quatrième bielle (22) et la plaque d'assise (9) sur le côté correspondant étant situé à une extrémité arrière sur la plaque d'assise (9) près de la direction de la marche ; et deux extrémités de la deuxième tige transversale fixe (34) sont respectivement articulées à une extrémité d'une cinquième bielle (26), dans laquelle l'autre extrémité de la cinquième bielle (26) est articulée à une plaque d'assise (9) sur un côté correspondant, un point d'articulation entre la cinquième bielle (26) et la plaque d'assise (9) sur le côté correspondant étant situé à une extrémité arrière de la plaque d'assise (9) près de la direction de la marche.

8. Selle à multiples degrés de liberté selon la revendication 7, dans laquelle la partie de support comprend une seconde colonne de support (21) disposée le long de la direction de la marche.

9. Selle à multiples degrés de liberté selon la revendication 8, dans laquelle un cinquième manchon d'arbre (31) est disposé de manière rotative à une extrémité avant de la seconde colonne de support (21) dans la direction de la marche, le cinquième manchon d'arbre (31) étant relié de manière fixe à une partie intermédiaire de la troisième tige transversale pivotante (32) ; un sixième manchon d'arbre (20) est disposé de manière rotative à une extrémité arrière de la seconde colonne de support (21) dans la direction de la marche, le sixième manchon d'arbre (20) étant relié de manière fixe à une partie intermédiaire de la quatrième tige transversale pivotante (19) ; un septième manchon d'arbre (27) est disposé de manière rotative à deux extrémités de la deuxième tige transversale fixe (34), le septième manchon d'arbre (27) étant relié de manière fixe à une extrémité de la cinquième bielle (26), l'autre extrémité de la cinquième bielle (26) étant munie de manière fixe d'un huitième arbre rotatif (25), dans laquelle le huitième arbre rotatif (25) est disposé de manière rotative dans un huitième manchon (24) fixé au niveau d'une partie inférieure de la plaque d'assise (9) et situé à l'extrémité arrière dans la direction de la marche, et une extrémité de la quatrième bielle (22) à distance de la quatrième tige transversale pivotante (19) est munie d'un neuvième manchon d'arbre (23) mis en correspondance de manière rotative avec le huitième arbre rotatif (25) ; et une extrémité avant au niveau de la partie inférieure de la plaque d'assise (9) dans la direction de la marche est munie de manière fixe d'un dixième manchon d'arbre (29), un dixième arbre rotatif (28) étant disposé de manière rotative dans le dixième manchon d'arbre (29), dans laquelle le dixième arbre rotatif (28) est relié de manière fixe à une extrémité de la troisième bielle (30) à distance de la troisième tige transversale pivotante (32).
